# FASCICULE DE BREVET EUROPEEN

(11) **EP 2 076 407 B1**
(45) Date de publication et mention de la délivrance du brevet: **19.08.2015**
(21) Numéro de dépôt: 07858519.7
(22) Date de dépôt: 05.10.2007
(51) Int. Cl.: B60K 37/06

(54) **PIECE D'INTERFACE POUR LE MONTAGE D'UN ELEMENT DANS UNE OUVERTURE D'UNE PLATINE**
SCHNITTSTELLENTEIL FÜR EINE ANORDNUNG AUS ELEMENTEN EINER ÖFFNUNG EINER PLATINE
INTERFACE PIECE FOR ASSSEMBLY OF AN ELEMENT IN AN OPENING IN A CIRCUIT BOARD

(30) Priorité: 12.10.2006 FR 0608940
(43) Date de publication de la demande: 08.07.2009
(73) Titulaire: Renault S.A.S., 92100 Boulogne-Billancourt (FR)
(72) Inventeur: BOUGAULT, Michel, 78380 Bougival (FR); MASSA, Xavier, 95110 Sannois (FR); REYSS, Bertrand, 91400 Orsay (FR); RYKAERT, Jean-Jacques, 93250 Villemomble (FR)
(86) Numéro de dépôt international: PCT/FR2007/052088
(87) Numéro de publication internationale: WO 2008/043945

(56) Documents cités:
- WO-A-2005/113992
- DE-A1- 4 409 108
- DE-A1- 10 241 869
- DE-B3-102004 022 945

## Description

La présente invention est relative à une pièce d'interface pour le montage d'un élément consistant en un obturateur ou en un interrupteur dans une ouverture d'une platine de véhicule automobile.

Dans les véhicules automobiles actuellement disponibles, de nombreux interrupteurs équipent le tableau de bord ou une console au voisinage de ce tableau, ou encore dans le voisinage immédiat des sièges des deux passagers avant, soit entre ces sièges, soit sur le panneau de la portière correspondante.

Ces interrupteurs sont placés sur une platine. Dans l'ensemble de la description, on entendra par le terme "platine", toute pièce formant partie intégrante d'un tableau de bord, d'une console, ou d'un panneau de portière de véhicule, qui est apte à recevoir de tels interrupteurs et qui présente des ouvertures de réception à cet effet.

Un interrupteur selon le préambule de la revendication 1 est connu par le document DE4409108A1.

Bien entendu, pour des questions de simplification de fabrication et de prix de revient, les mêmes platines sont fabriquées quel que soit le niveau de finition de la voiture.

Dans le cas d'une finition d'un niveau élevé, il est habituel de pouvoir mettre en oeuvre un nombre de fonctions, notamment de sécurité et de confort, plus important que sur un niveau de finition inférieur.

Dans le cadre de ces finitions de niveau inférieur, il est courant de placer, dans les ouvertures qui ne sont pas destinées à recevoir un interrupteur "actif", c'est-à-dire un interrupteur dont l'actionnement active réellement une fonction de la voiture, des interrupteurs "inactifs" ou encore des obturateurs.

On entend par "obturateur" une pièce qui a, vue depuis l'habitacle du véhicule, le même aspect qu'un interrupteur classique, mais qui est constituée d'une simple coque de matière plastique.

Pour la mise en place de ces éléments, qu'il s'agisse d'un obturateur ou d'un interrupteur, on utilise une pièce d'interface qui vient se placer dans une ouverture de la platine. Il s'agit généralement d'une pièce qui s'inscrit dans un parallélépipède rectangle et qui comprend une paroi de fond dont la face externe dite "frontale" est apte à être rendue solidaire de l'élément, ainsi qu'un ensemble de parois latérales, parallèles deux à deux, qui s'étendent à partir de la paroi de fond du côté de sa face interne dite "arrière".

La mise en place de ces pièces d'interface présente les difficultés suivantes.

En premier lieu, si le montage de la pièce d'interface sur la platine, opération qui se fait par l'arrière de celle-ci, à l'opposé de l'ouverture, n'est pas fait avec toute l'attention requise, il arrive fréquemment que cette pièce soit mal positionnée, ce qui se traduit par un défaut d'alignement de l'obturateur ou de l'interrupteur associé, par rapport à la platine.

En second lieu, dans la mesure où les pièces d'interface sont des pièces présentant une symétrie axiale, il arrive fréquemment qu'elles soient montées dans une position inverse de celle qui est requise.

Enfin, le montage de ces pièces d'interface se fait à l'aveugle, ce qui signifie que l'opérateur n'est pas directement renseigné, lors du montage de la pièce et de l'élément associé, de la fonction de cet élément.

La présente invention vise donc à solutionner ces problèmes, en proposant une pièce d'interface dont le montage puisse se faire de manière systématiquement correcte, sans risque de défaut de montage ou d'alignement. Elle vise également à fournir une pièce qui renseigne l'opérateur sur son sens de montage, ainsi que sur la fonction de l'élément (obturateur ou interrupteur) qui lui est associé.

Il s'agit donc d'un ensemble de montage selon la revendication 1.

Il apparaît de ce qui précède que les organes d'encliquetage permettent d'engager et d'immobiliser correctement la pièce d'interface par rapport aux cloisons prévues au niveau de la platine.

De plus, les moyens détrompeurs de montage ainsi que les moyens visuels renseignent l'opérateur sur le sens de montage et sur la fonction de l'élément associé à la pièce d'interface. Ainsi, on économise du temps lors de son montage.

Selon d'autres caractéristiques avantageuses et non limitatives de cette pièce d'interface :
- lesdits organes d'encliquetage élastique et d'immobilisation, consistent en des dents d'une pièce avec desdites faces ;
- lesdites dents comprennent une face biseautée formant chanfrein pour leur engagement dans lesdites ouvertures complémentaires, ainsi qu'une face d'appui sur un bord correspondant desdites ouvertures ;
- la face frontale de ladite paroi de fond porte des moyens de rattrapage de jeu d'encliquetage, relativement à ladite platine ;
- lesdits moyens de rattrapage comprennent au moins une aile déformable, généralement orientée selon une direction parallèle à ladite face frontale, et présentant une forme ondulée ;
- lesdits moyens détrompeurs de montage et/ou lesdits moyens visuels font saillie de ladite paroi latérale ;
- elle comporte un conduit qui s'étend perpendiculairement à ladite paroi de fond, du côté de sa face arrière ;
- ledit conduit est solidaire de la face arrière de ladite paroi, préférentiellement d'une pièce avec elle ;
- ledit conduit est solidaire d'une seconde paroi de fond, parallèle à la première.

D'autres caractéristiques et avantages de la présente invention apparaîtront à la lecture de la description qui va suivre de certains modes de réalisation.

Cette description sera faite en référence aux dessins annexés dans lesquels :
- la figure 1 est une vue de dessus d'une partie de platine de véhicule automobile, équipée d'un interrupteur et d'un obturateur ;
- la figure 2 est une vue en perspective d'une pièce d'interface selon l'invention, sur laquelle est montée un interrupteur ;
- la figure 3 est une vue également en perspective d'une pièce d'interface pour le montage d'un obturateur ;
- la figure 4 est une vue en perspective, et plus précisément en contre plongée, d'un obturateur apte à coopérer avec la pièce de la figure 3 ;
- la figure 5 est une vue en perspective de l'assemblage des pièce d'interface et obturateur des figures 3 et 4 ;

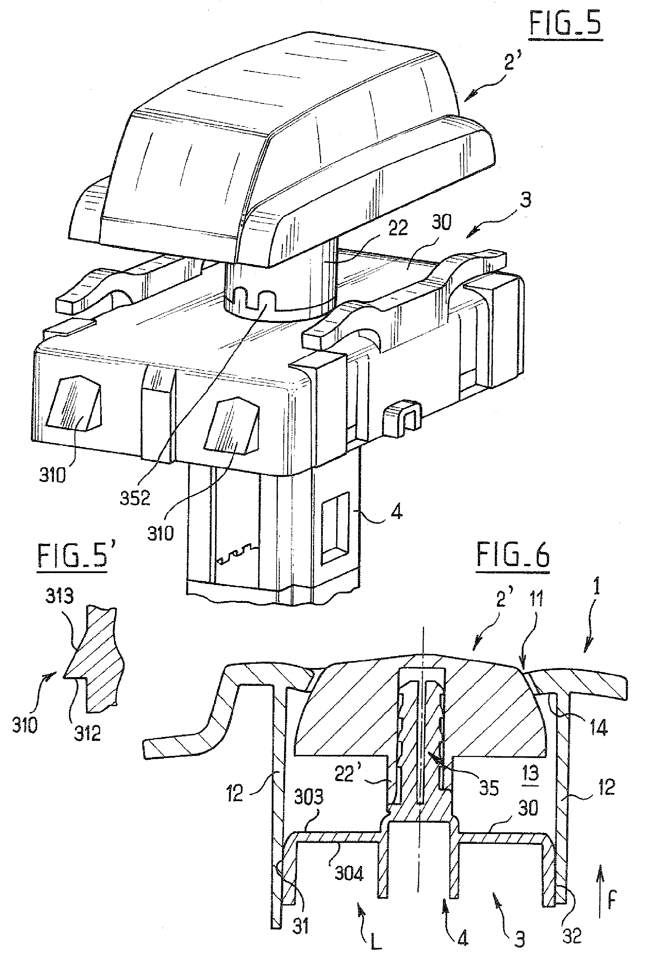

- la figure 5' est une vue de détail d'une dent d'encliquetage élastique portée par ladite pièce d'interface ;
- la figure 6 est une vue simplifiée en coupe d'une partie de platine recevant une pièce d'interface et un obturateur associé ;

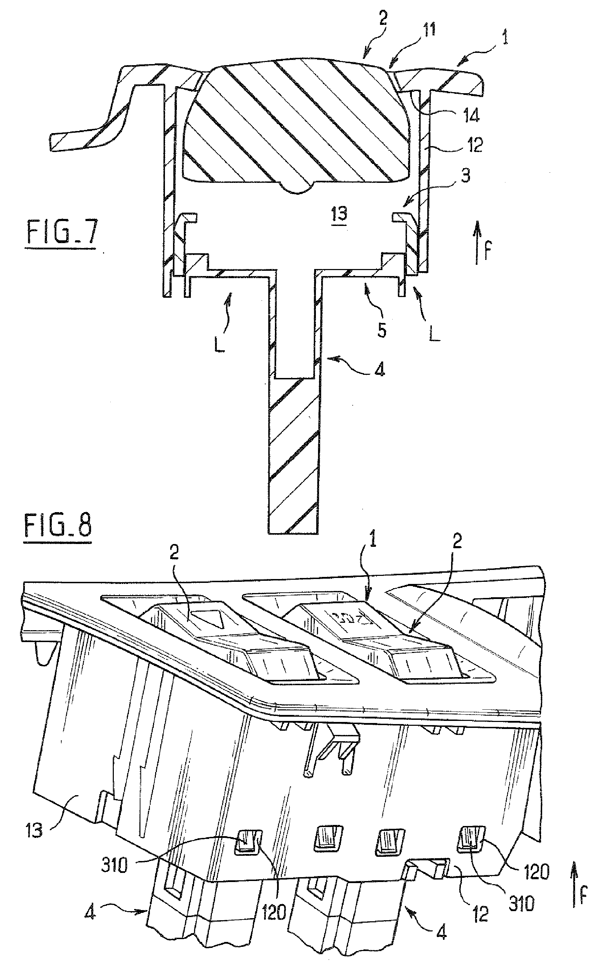

- la figure 7 est une vue analogue à la précédente, mais montrant cette fois-ci l'association pièce d'interface / interrupteur ;
- la figure 8 est une vue en perspective d'une partie de platine recevant deux interrupteurs voisins ;

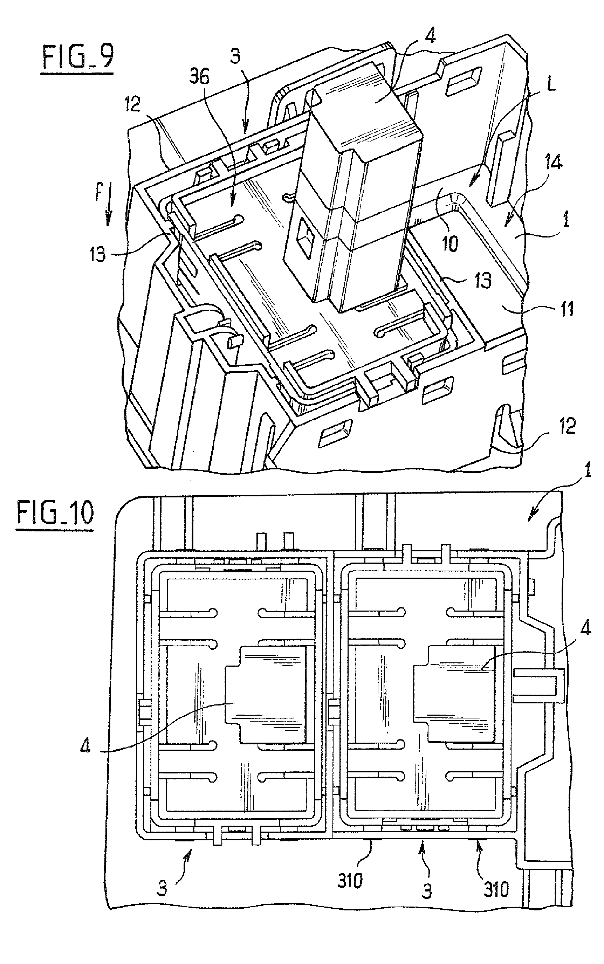

- la figure 9 est une vue de dessous d'une pièce d'interface en place dans une platine ;
- enfin, la figure 10 est une vue de dessous de deux pièces d'interface montées dans ladite platine.

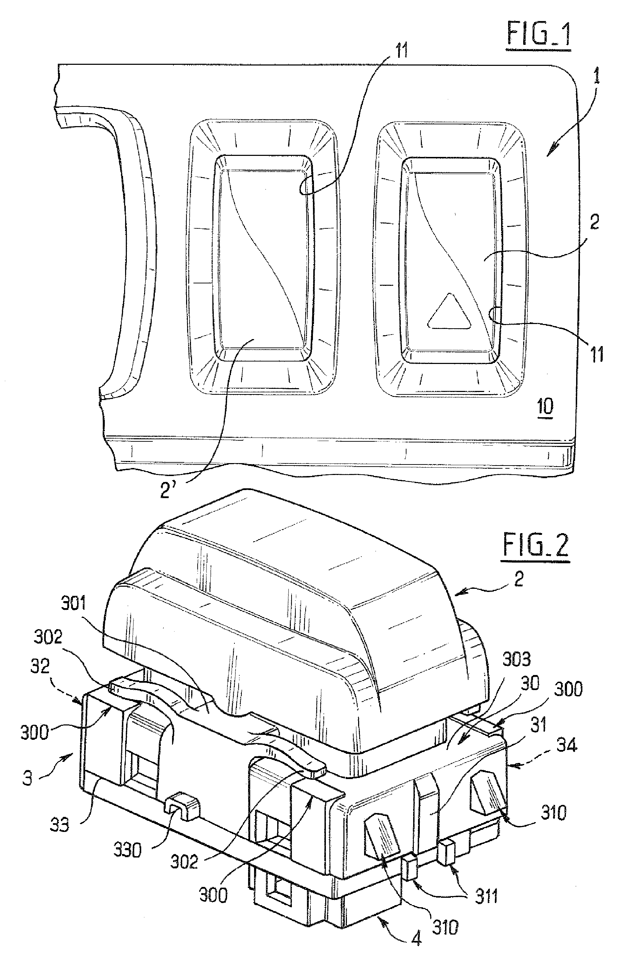

A la figure 1, est visible partiellement une platine 1 qui équipe par exemple le tableau de bord d'un véhicule ou un panneau de portière.

Sa face frontale 10 est pourvue de deux ouvertures sensiblement rectangulaires 11 à travers lesquelles affleurent les faces visibles d'un interrupteur 2 et d'un obturateur 2'.

L'actionnement de l'interrupteur 2 provoque la mise en route, respectivement l'arrêt, d'une fonction associée à cet interrupteur.

Quant à l'obturateur 2', il a simplement une fonction esthétique, à savoir celle d'occuper l'emplacement laissé disponible par l'ouverture 11.

Dans une version de niveau supérieur du véhicule, cet obturateur 2' serait remplacé par un interrupteur 2 du même style que le précédent, associé à une autre fonction liée au véhicule.

Dans la pratique, l'obturateur peut être constitué d'une pièce spécialement dédiée à cette fonction. Dans d'autres cas, il peut s'agir d'un vrai interrupteur, mais rendu inactif et, de préférence, vidé de ses composants électroniques.

Toujours en se reportant à la figure 1, on comprend que sur le plan esthétique et de qualité de finition, il est particulièrement important que l'interrupteur et l'obturateur soient parfaitement calés et mis en place relativement à la platine 1, et plus particulièrement aux ouvertures 11.

On se reportera maintenant plus particulièrement aux figures 2, 3, 5, 6 et 7 pour décrire une pièce d'interface conforme à l'invention.

Comme déjà dit, cette pièce d'interface permet le montage d'un élément consistant en un interrupteur 2 ou un obturateur 2' tel que présenté en référence à la figure 1, dans une ouverture d'une platine 1 d'un véhicule automobile.

Ainsi que cela est visible en référence aux figures précitées, cette pièce d'interface 3, qui est constituée de matière plastique moulée, s'inscrit dans un parallélépipède rectangle.

Elle comprend une paroi de fond 30 dont la face externe 303 dite "face frontale" est apte à être rendue solidaire d'un obturateur ou d'un interrupteur, ainsi qu'on le verra plus précisément dans la suite de la description.

A cette paroi de fond sont rattachées quatre parois latérales, qui sont parallèles deux à deux et qui délimitent avec la paroi de fond le parallélépipède rectangle précité.

Ces parois latérales s'étendent à partir de la paroi de fond, du côté de sa face interne 304 dite "face arrière", opposée à la face frontale.

Ces faces latérales portent sur les figures les références 31, 32, 33 et 34. Les faces 31 et 32, parallèles entre elles, sont de petites faces transversales, tandis que les deux autres parois latérales 33 et 34 sont de grandes faces longitudinales.

Conformément à une caractéristique particulière de l'invention, deux des parois latérales parallèles portent chacune, sur leur face externe, au moins une paire d'organes d'encliquetage élastique et d'immobilisation, dans des ouvertures complémentaires prévues dans des cloisons solidaires de la platine 1 précitée.

En l'occurrence, et conformément au mode de réalisation décrit ici, les deux parois latérales en question sont les petites parois transversales 31 et 32.

On a ici affaire à deux organes d'encliquetage élastique sur chacune des deux faces, qui portent les références 310. Sur les figures précitées, seuls les organes 310 qui équipent la paroi 31 sont visibles.

Dans la forme de réalisation décrite, ces moyens d'encliquetage élastique et d'immobilisation consistent en des dents qui sont d'une pièce avec les faces 31 et 32, ce qui signifie qu'elles viennent de moulage avec ces faces.

En se reportant à la figure 5', on constate que les dents comportent une face d'appui 312 ainsi qu'une face biseautée 313. La face d'appui 312 est perpendiculaire à la paroi 31 ou 32 associée et est tournée du côté de leur extrémité libre. La face biseautée 313 s'étend depuis l'extrémité de la face d'appui 312 et rejoint la paroi 31 ou 32 associée. Elle forme avec cette dernière un angle aigu.

Bien entendu les quatre dents 310 occupent des emplacements similaires au niveau des parois 31 et 32, ce qui signifie que notamment leurs faces d'appui 312 se situent dans un même plan parallèle à la paroi de fond 30.

Dans un mode de réalisation non décrit, on pourrait avoir affaire à plus de quatre dents 310, par exemple six, réparties en nombre égal sur chaque paroi.

On expliquera plus loin dans la description la manière dont ces organes d'encliquetage élastique coopèrent avec la platine 1.

Conformément à une autre caractéristique de l'invention, une paroi latérale de la pièce d'interface 3 porte des moyens visuels qui renseignent un opérateur sur la fonction de l'élément associé (interrupteur 2 ou obturateur 2') qui est destiné à lui être associé. En référence notamment à la figure 2, c'est la face transversale 31 qui porte de tels moyens visuels. Ils sont ici constitués par des plots 311 qui font saillie depuis la face 31 et qui viennent de moulage avec elle.

Bien entendu, en fonction de l'élément associé à la pièce d'interface, la disposition et/ou le nombre de ces plots peut varier. Dans une autre forme de réalisation, ces moyens visuels pourraient être constitués de moyens de repérage en creux ou par des symboles dessinés sur la surface de la paroi.

Bien entendu, ces moyens visuels peuvent être portés par une autre face que la face transversale 31.

Toujours en accord avec la présente invention, une paroi latérale porte sur sa face externe, des moyens détrompeurs de montage.

En référence à la figure 2, c'est ici la face longitudinale 33 qui porte ces moyens détrompeurs. Ils consistent ici également en un plot 330 qui fait saillie depuis la paroi et qui vient de moulage avec elle.

De ce qui précède, on constate que la pièce présente une symétrie à la fois longitudinale et transversale. La présence de ces moyens détrompeurs de montage permettent donc à un opérateur la mise en place directe de la pièce d'interface, sans se poser la question de son sens de montage.

Comme précisé plus haut, la paroi de fond 30 est destinée à être rendue solidaire d'un élément 2 ou 2'.

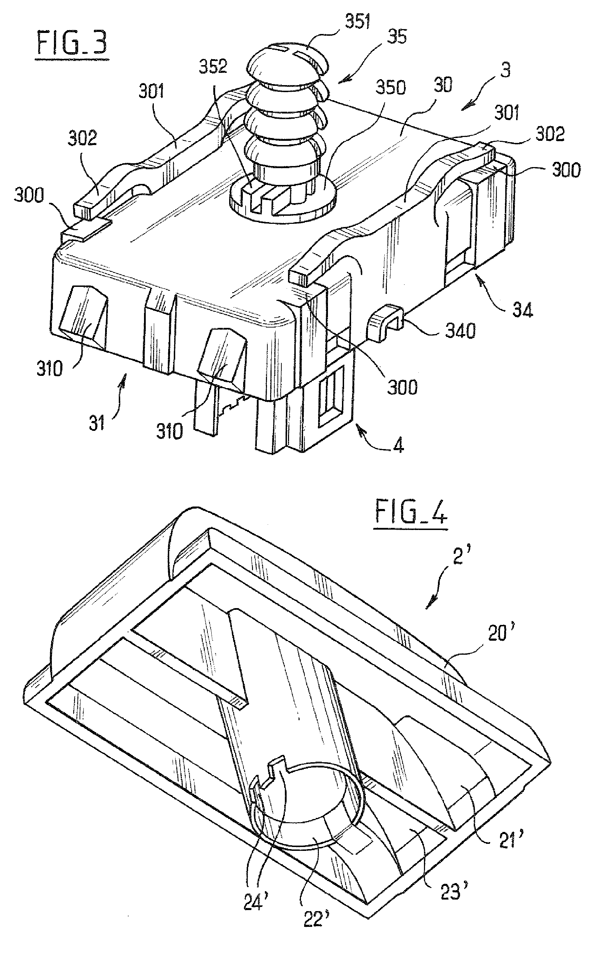

En particulier aux figures 3 et 6 sont visibles des moyens qui permettent cette solidarisation.

Il s'agit ici de moyens d'emmanchement à force 35 constitués d'une "agrafe sapin" 351 qui s'étend perpendiculairement à la paroi 30, du côté de sa face frontale 303, depuis une platine circulaire 350. Sur cette platine sont formés deux plots 352 dont on expliquera ci-après la fonction.

Ces moyens d'emmanchement à force sont plus particulièrement destinés à la réception d'un obturateur 2', ainsi que le montrent les figures 5 et 6.

A la figure 4 est représenté un tel obturateur 2'.

Il présente une coque 20' qui s'inscrit dans un parallélépipède rectangle et dont la face frontale, qui n'est pas visible ici, présente un aspect tout à fait similaire à celui que présente la face frontale d'un interrupteur classique.

La cavité interne 21' de cet obturateur est occupée par un manchon cylindrique 22' généralement perpendiculaire à la face frontale et dont le diamètre est adapté pour venir coopérer avec les dents de l'agrafe sapin précitée. L'extrémité libre de ce manchon présente deux découpes 24' qui sont destinées à venir coopérer avec les plots 352 dont il a été fait état plus haut. Des nervures 23 s'étendent depuis le manchon 22' jusqu'aux parois de l'obturateur et participent à la rigidification de celui-ci.

On comprend donc aisément qu'en emmanchant l'obturateur 2' sur l'agrafe sapin visible à la figure 3, on peut alors mettre en place cet obturateur sur la pièce d'interface pour obtenir un assemblage tel que celui présenté aux figures 5 et 6.

Bien entendu, dans d'autres modes de réalisation qui ne seront pas présentés ici, cette coopération entre l'interface et l'obturateur, respectivement l'interrupteur, peut se faire par tout autre moyen connu de l'homme du métier, tels des moyens d'ajustement cylindriques serrés ou par collage, tout simplement.

Egalement dans un autre mode de réalisation non décrit, l'obturateur de la figure 4' peut être remplacé par un interrupteur classique que l'on aura bloqué et dont on aura enlevé préférentiellement tous les constituants électroniques.

Toujours en référence à une caractéristique avantageuse de l'invention, la face frontale 303 de la paroi de fond 30 porte des moyens de rattrape de jeu d'encliquetage relativement à la platine sur laquelle la pièce est destinée à être montée.

Ces moyens de rattrapage comprennent au moins une aile déformable qui est généralement orientée selon une direction parallèle à la face frontale et qui présente une forme ondulée.

On se reportera plus particulièrement aux figures 2 et 3 pour expliquer la structure de ces moyens. En l'occurrence, ils s'étendent sur la paroi de fond 30 du côté de sa face frontale et bordent celle-ci le long des deux parois latérales longitudinales 34 et 33.

Ils comprennent un pied 301 qui s'élève perpendiculairement vers le haut au-dessus de la paroi 30. A ce pied se raccordent deux ailes 302 opposées l'une à l'autre, de sorte que, vu de face, l'ensemble 301-302 a une forme générale de "T".

Toutefois, comme précisé plus haut, les ailes 302 ont une forme ondulée, que sorte que leur niveau le plus haut s'étend au-dessus du sommet du pied 301. A l'aplomb des extrémités libres des ailes 302 sont prévues, sur la face frontale 303, des plots 300 venant de moulage. Les plots constituent des butées d'arrêt desdites extrémités libres.

Bien entendu, l'emplacement de ces moyens est prévu pour ne pas contrarier la mise en place de l'obturateur ou de l'interrupteur que la pièce d'interface est destinée à recevoir.

Comme montré plus particulièrement à la figure 6, de la paroi de fond 30 s'étend, du côté de sa face arrière 304, un conduit 4 qui vient de moulage avec celle-ci. Ce conduit s'étend dans le même axe que l'agrafe sapin 350.

En se reportant à la figure 7, on a représenté la structure d'une pièce d'interface qui reçoit non pas un obturateur, mais un interrupteur fonctionnel.

On voit que la pièce d'interface 3 comporte une paroi de fond supplémentaire 5 qui est destinée à venir fermer l'espace interne que présente la pièce d'interface. C'est sur cette paroi de fond supplémentaire que prend naissance un conduit 4 analogue à celui qui vient d'être présenté plus haut. Ce conduit sert de logement à des câbles à relier à des équipements électroniques abrités par l'interrupteur 2.

Aux figures 6 et 7, sont visibles les logements **L** qui s'étendent en arrière de la face visible de la platine 1 sur laquelle les interrupteurs et obturateurs sont destinés à être montés.

En l'occurrence, ces logements sont délimités d'une part par la paroi 10 de la platine, avec ses ouvertures 11 associées, et un ensemble de parois 12 et 13. C'est par l'orifice de ces logements qui est opposé aux ouvertures 11 que se fait le montage de l'ensemble pièce d'interface 3 / interrupteur 2 ou obturateur 2'.

Ce sens de montage est repéré par la flèche **f** aux figures 6, 8 et 9.

Lors de cet engagement, les faces chanfreinées 313 des dents 310 que présentent les parois latérales de la pièce d'interface, viennent en contact avec les cloisons 13 précitées et s'engagent dans des ouvertures 120 prévues à cet effet. On se situe donc dans la situation des figures 8, 9 et 10 dans laquelle les pièces d'interface sont complètement calées dans leur logement.

En effet, les dents 310 viennent se caler dans les ouvertures 120 prévues à cet effet. Les ailes 302 précitées s'appuient contre la face interne 14 de la paroi frontale de la platine.

Elles se déforment le cas échéant, compensant ainsi des jeux éventuels. Par ailleurs, les parois latérales de la pièce d'interface s'appuient sur les cloisons 12 et 13 du logement **L**.

Ainsi, on obtient un parfait montage des obturateurs et interrupteurs, sans que ceux-ci ne présentent de décalage de montage.

## Revendications

1. Ensemble de montage comprenant un élément consistant en un obturateur (2') ou en un interrupteur (2) apte à être monté dans une ouverture (11) d'une platine (1) d'un véhicule automobile et une pièce d'interface (3) qui s'inscrit dans un parallélépipède rectangle et qui comprend une paroi de fond (30) dont la face externe (303), dite "frontale" est apte à être rendue solidaire dudit élément (2 ; 2'), ainsi qu'un ensemble de parois latérales (31, 32, 33, 34), parallèles deux à deux, qui s'étendent à partir de la paroi de fond (30), du côté de sa face interne (304) dite "arrière", **caractérisée par le fait que** :
- deux (31, 32) desdites parois latérales parallèles portent chacune, sur leur face externe, au moins une paire d'organes (310) d'encliquetage élastique et d'immobilisation dans des ouvertures complémentaires (120) prévues dans des cloisons (12) solidaires de ladite platine (1) ;
- une paroi latérale (33) porte, sur sa face externe, des moyens détrompeurs de montage (330) ;
- une paroi latérale (31) porte des moyens visuels (311) renseignant sur la fonction dudit élément associé (2 ; 2').

2. Ensemble de montage selon la revendication 1, **caractérisée par le fait que** lesdits organes d'encliquetage élastique et d'immobilisation (310), consistent en des dents d'une pièce avec desdites faces (31, 32).

3. Ensemble de montage selon la revendication 2, **caractérisée par le fait que** lesdites dents (310) comprennent une face biseautée (313) formant chanfrein pour leur engagement dans lesdites ouvertures complémentaires (120), ainsi qu'une face d'appui (312) sur un bord correspondant desdites ouvertures (120).

4. Ensemble de montage selon l'une des revendications précédentes, **caractérisée par le fait que** la face frontale (303) de ladite paroi de fond (30) porte des moyens de rattrapage (301, 302) de jeu d'encliquetage, relativement à ladite platine (1).

5. Ensemble de montage selon la revendication 4, **caractérisée par le fait que** lesdits moyens de rattrapage (301, 302) comprennent au moins une aile déformable (302), généralement orientée selon une direction parallèle à ladite face frontale (30), et présentant une forme ondulée.

6. Ensemble de montage selon l'une des revendications précédentes, **caractérisée par le fait que** lesdits moyens détrompeurs de montage (330) et/ou lesdits moyens visuels (311) font saillie de ladite paroi latérale.

7. Ensemble de montage selon l'une des revendications précédentes, **caractérisée par le fait qu'**elle comporte un conduit (4) qui s'étend perpendiculairement à ladite paroi de fond (30), du côté de sa face arrière (304).

8. Ensemble de montage selon la revendication 7, **caractérisée par le fait que** ledit conduit (4) est solidaire de la face arrière (304) de ladite paroi (30), préférentiellement d'une pièce avec elle.

9. Ensemble de montage selon la revendication 7, **caractérisée par le fait que** ledit conduit (4) est solidaire d'une seconde paroi de fond (5), parallèle à la première.

## Patentansprüche

1. Montageeinheit, die ein Element umfasst, das aus einem Verschluss (2') oder aus einem Schalter (2) besteht, der geeignet ist, um in eine Öffnung (11) einer Platine (1) eines Kraftfahrzeugs montiert zu werden, und ein Schnittstellenteil (3), das in ein rechteckiges Parallelepiped fällt und eine Bodenwand (30) umfasst, deren Außenseite (303), "frontal" genannt, geeignet ist, um fest mit dem Element (2; 2') verbunden zu werden, sowie eine Einheit Seitenwände (31, 32, 33, 34), die zu je zwei parallel sind, die sich ausgehend von der Bodenwand (30) auf der Seite ihrer Innenfläche (304), "hinten" genannt, erstrecken, **dadurch gekennzeichnet, dass**:
- zwei (31, 32) der parallelen Seitenwände jeweils auf ihrer Außenseite mindestens ein Paar Organe (310) zum elastischen Einrasten und Immobilisieren in komplementären Öffnungen (120), die in Wänden (12), die fest mit der Platine (1) verbunden sind, vorgesehen sind, tragen,
- eine Seitenwand (33) auf ihrer Außenseite Montage-Unverwechselbarkeitsmittel (330) trägt,
- eine Seitenwand (31) visuelle Mittel (311) trägt, die über die Funktion des dazugehörenden Elements (2; 2') informieren.

2. Montageeinheit nach Anspruch 1, **dadurch gekennzeichnet, dass** die elastischen Einrast- und Immobilisierungsorgane (310) aus Zähnen eines Teils mit den Seiten (31, 32) bestehen.

3. Montageeinheit nach Anspruch 2, **dadurch gekennzeichnet, dass** die Zähne (310) eine abgeschrägte Seite (313) umfassen, die eine Abfasung für ihren Eingriff in die komplementären Öffnungen (120) bildet, sowie eine Auflageseite (312) auf einem entsprechenden Rand der Öffnungen (120).

4. Montageeinheit nach einem der vorhergehenden Ansprüche, **dadurch gekennzeichnet, dass** die frontale Seite (303) der Bodenwand (30) Einrastspiel-Nachstellmittel (301, 302) in Bezug auf die Platine (1) trägt.

5. Montageeinheit nach Anspruch 4, **dadurch gekennzeichnet, dass** die Nachstellmittel (301, 302) mindestens einen verformbaren Flügel (302), der allgemein entlang einer Richtung parallel zu der Frontseite (30) ausgerichtet ist und eine wellige Form aufweist, umfassen.

6. Montageeinheit nach einem der vorhergehenden Ansprüche, **dadurch gekennzeichnet, dass** die Montage-Unverwechselbarkeitsmittel (330) und/oder die visuellen Mittel (311) aus der Seitenwand vorstehen.

7. Montageeinheit nach einem der vorhergehenden Ansprüche, **dadurch gekennzeichnet, dass** sie eine Leitung (4) umfasst, die sich senkrecht zu der Bodenwand (30) auf der Seite ihrer Rückseite (304) erstreckt.

8. Montageeinheit nach Anspruch 7, **dadurch gekennzeichnet, dass** die Leitung (4) fest mit der Rückseite (304) der Wand (30) verbunden ist, vorzugsweise aus einem Teil mit ihr besteht.

9. Montageeinheit nach Anspruch 7, **dadurch gekennzeichnet, dass** die Leitung (4) fest mit einer zweiten Bodenwand (5), die zu der ersten parallel ist, verbunden ist.

## Claims

1. Mounting assembly comprising an element consisting of a blanking piece (2') or a switch (2) that can be mounted in an opening (11) of a mounting plate (1) of a motor vehicle and an interface piece (3) which falls inside a rectangular parallelepiped and which comprises an end wall (30) of which the external face (303), referred to as the "front" face, can be secured to the said element (2; 2'), and a collection of side walls (31, 32, 33, 34), in parallel pairs, which extend from the end wall (30), on the side of its internal face, (304) referred to as the "back" face, **characterized in that**:
- two (31, 32) of the said parallel side walls each bear, on their external face, at least one pair of members (310) to clip elastically and become immobilized in complementary openings (120) made in partition walls (12) secured to the said mounting plate (1);
- one side wall (33) on its external face bears poka-yoke mounting means (330);
- one side wall (31) bears visual means (311) informing as to the function of the said associated element (2; 2').

2. Mounting assembly according to Claim 1, **characterized in that** the said elastic clip-fastening and immobilizing members (310) consist of teeth made of one piece with the said faces (31, 32).

3. Mounting assembly according to Claim 2, **characterized in that** the said teeth (310) have a bevelled face (313) acting as a champher for engaging them in the said complementary openings (120), and a bearing face (312) for bearing on a corresponding edge of the said openings (120).

4. Mounting assembly according to one of the preceding claims, **characterized in that** the front face (303) of the said end wall (30) bears means (301, 302) for taking up clip-fastening clearance relative to the said mounting plate (1).

5. Mounting assembly according to Claim 4, **characterized in that** the said clearance compensating means (301, 302) comprise at least one deformable flange (302) generally oriented in a direction parallel to the said front face (30) and having a wavy shape.

6. Mounting assembly according to one of the preceding claims, **characterized in that** the said poka-yoke mounting means (330) and/or the said visual means (311) project on the said side wall.

7. Mounting assembly according to one of the preceding claims, **characterized in that** it comprises a duct (4) which extends at right angles to the said end wall (30) on the side of the rear face (304) thereof.

8. Mounting assembly according to Claim 7, **characterized in that** the said duct (4) is secured to the back face (304) of the said wall (30), and is preferably of one piece therewith.

9. Mounting assembly according to Claim 7, **characterized in that** the said duct (4) is secured to a second end wall (5), parallel to the first.
